# EUROPEAN PATENT APPLICATION

(11) **EP 1 971 145 A2**
(43) Date of publication of application: **17.09.2008**
(21) Application number: 08151910.0
(22) Date of filing: 25.02.2008
(51) Int. Cl.: H04N 7/173, H04N 5/00

(54) **Method and apparatus for displaying interactive data in real time**

(30) Priority: 15.03.2007 KR 20070025703
(71) Applicant: Samsung Electronics Co., Ltd., Suwon-si, Gyeonggi-do 442-742 (KR)
(72) Inventor: Namgung, Eun, Yeongtong-gu, Suwon-si Gyeonggi-do (KR)
(74) Representative: Rooney, John-Paul

(57) **Abstract**

A method and apparatus for displaying interactive data in real time are provided. The method includes displaying interactive data in a real-time streaming service, including receiving (S110) an interactive data information file for multimedia content currently being played back through a channel different from a multimedia-content-receiving channel, displaying (S140) an object item list (210) expressed by the interactive data information file on a playback screen (410) of the multimedia content in real time, and if a user's command to select at least one of the object items contained in the object item list is input, receiving (S150) the selected object item and displaying the same.

## Description

### BACKGROUND OF THE INVENTION

### 1. Field of the Invention

The present invention relates to real-time streaming service technology, and, more particularly, to a method and apparatus for displaying interactive data in real time, in which interactive data is added to associated real-time streaming content in real time.

### 2. Description of the Related Art

Among various types of real-time streaming services, VOD (Video On Demand), which is now in widespread use, provides video information requested by a user in real time. The VOD service is also referred to as a customized video data service or a VOD reference system. Unlike in conventional unidirectional broadcasting through the existing public network or cable TV system, VOD is a bidirectional service that transmits desired content at a desired time in accordance with a subscriber's request. In addition, the VOD service provides various functions such as play, stop, pause, fast forward, rewind, and playback at an arbitrary position in the stream. Examples of systems that can use the VOD service include high-speed backbone networks, access networks, set-top boxes, and multimedia database management systems (DBMS). The set-top box plays compressed digital video and audio that is transmitted by the video server, and sends the user's requests to the video server. A large, optimized database storing video data and audio data is managed by the video server in order to provide video data or audio data in real time. VOD may also be used in other applications, such as remote-control medical treatment, remote-control education, home banking, home shopping, and telecommunications.

In order to render the VOD service, IPTV (Internet Protocol Television) is often used. IPTV is an interactive television service in which a variety of information, moving image content, broadcasting services, and so on are provided through a television receiver over ultrahigh-speed Internet. IPTV incorporates both Internet and television (TV) services. However, IPTV is different from a conventional Internet TV in that a television receiver and a remote control are used, rather than a computer monitor and a mouse, respectively. IPTV service can be utilized simply by connecting a television receiver, a set-top box, and an Internet channel, and provides broadcasting services, including video content. In these respects, IPTV is similar to general cable broadcasting, satellite broadcasting, or public broadcasting. However, IPTV differentiates itself from existing broadcasting in that it allows interactivity and viewers can view their favorite programs at a desired time.

Meanwhile, as an evolution of the existing interactive VOD service, a technique has been proposed for displaying interactive data, upon a user's request, about objects appearing in the multimedia content in the course of receiving the multimedia content and playing back the same.

According to the conventional techniques, however, additional data associated with the multimedia content cannot be downloaded at a receiving terminal when the multimedia content is actively being played back, but may be included in audio/video streams of the multimedia content to be received at the receiving terminal. Thus, additional data about object items appearing in a list of additional data available at the time of the user's request cannot be displayed in real time.

In addition, in a case where a receiving terminal, which plays back multimedia content continuously, receives event information or interactive data such as images or text included in the audio/video streams, overhead is used by the receiving terminal and bandwidth may be wasted due to the overhead, thereby deteriorating VOD service quality. Furthermore, a VOD service provider has little control of the quality of the VOD service.

### SUMMARY OF THE INVENTION

According to the present invention there is provided an apparatus and method as set forth in the appended claims. Other features of the invention will be apparent from the dependent claims, and the description which follows.

The present invention aims to provide a method and apparatus for displaying interactive data in real time, by which a VOD-service-receiving terminal can receive and download an interactive data information file associated with multimedia content through a channel different from audio/video (AV) streams of the multimedia content in advance, thereby displaying a list of object items at a desired time at a user's request.

The above and other objects of the present invention will be described in or be apparent from the following description of the preferred embodiments.

According to an aspect of the present invention, there is provided a method of displaying interactive data in real time, the method including receiving an interactive data information file for multimedia content currently being played back, through a channel different from a multimedia-content-receiving channel, displaying an object item list expressed by the interactive data information file on the playback screen of the multimedia content in real time, and if a user inputs a command to select at least one among multiple object items contained in the object item list, receiving the selected object item and displaying the same.

According to another aspect of the present invention, there is provided an apparatus for displaying interactive data in a real-time streaming service, the apparatus including a playback unit playing back multimedia content, a receiving unit receiving, through a channel different from the multimedia-content-receiving channel, an interactive data information file for the multimedia content currently being played back, and a display unit displaying an object item list expressed by the interactive data information file on the playback screen of the multimedia content in real time, and, if a user inputs a command to select at least one among multiple object items contained in the object item list, receiving the selected object item and displaying the same.

According to still another aspect of the present invention, there is provided an interactive Internet protocol television (IP TV) including a media player playing back multimedia content, a downloader downloading an interactive data information file for the multimedia content currently being played back through a channel different from the multimedia-content-receiving channel, a parser analyzing the interactive data information file and storing the same in a node-type file having a predetermined time period, a control unit checking the elapsed playback time of the multimedia content based on the current time and confirming that a node-type file matching to the current time exists, and a display unit displaying an object item list expressed by the interactive data information file on the playback screen of the multimedia content in real time, and, if a user inputs a command to select at least one among multiple object items contained in the object item list, receiving the selected object item and displaying the same.

### BRIEF DESCRIPTION OF THE DRAWINGS

The above and other features and advantages of the present invention will become apparent by describing in detail preferred embodiments thereof with reference to the attached drawings in which:
FIG. 1 is a schematic diagram showing an apparatus that provides interactive data in real time in a video on demand (VOD) service according to an exemplary embodiment of the present invention;
FIG. 2 shows a process of displaying multimedia content and a list of object items in real time according to an exemplary embodiment of the present invention;
FIG. 3A shows a process of displaying object items in real time according to a first exemplary embodiment of the present invention;
FIG. 3B shows a process of displaying object items in real time according to a second exemplary embodiment of the present invention;
FIG. 3C shows a process of displaying object items in real time according to a third exemplary embodiment of the present invention;
FIG. 4 illustrates the process of creating an interactive data information file using an editor tool by a VOD service provider;
FIG. 5 illustrates an interactive data information file created by the process shown in FIG. 4; and
FIG. 6 is a flowchart illustrating a method of providing interactive data in real time as a part of a video on demand (VOD) service according to an exemplary embodiment of the present invention.

### DETAILED DESCRIPTION OF THE INVENTION

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

Although the present invention may be applied to any type of real-time streaming service techniques regardless of the type of multimedia content, preferred embodiments of the present invention can be advantageously applied to a method of downloading VOD service-based content, and a method of playing back VOD content will be described in the exemplary embodiments of the present invention that follow. However, it should be noted that the real-time streaming service is not limited to a VOD service.

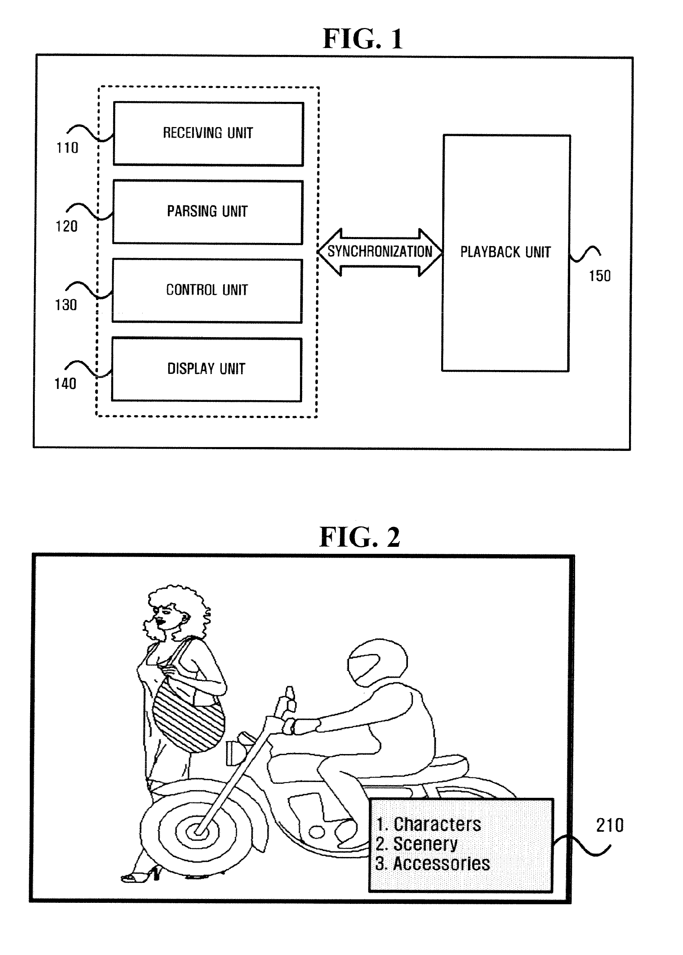

FIG. 1 is a schematic diagram showing an apparatus that provides interactive data in real time in a video on demand (VOD) service according to an exemplary embodiment of the present invention. Referring to FIG. 1, the apparatus includes a receiving unit 110, a parsing unit 120, a control unit 130, a display unit 140, and a playback unit 150.

First, the playback unit 150 functions as a media player that plays back multimedia content.

The receiving unit 110 receives an interactive data information file for the multimedia content played back by the playback unit 150 from a server providing the content through a channel different from a multimedia-content-receiving channel. Here, the multimedia content is of a type that can be played back by a general A/V media player, and is to be provided by a VOD service method. In addition, the interactive data information file is received through a channel different from the multimedia-content-receiving channel, which means a separate connection must be opened between the channel and the VOD service provider by opening a communications port different from the port receiving audio/video streams, which is information constituting the multimedia content.

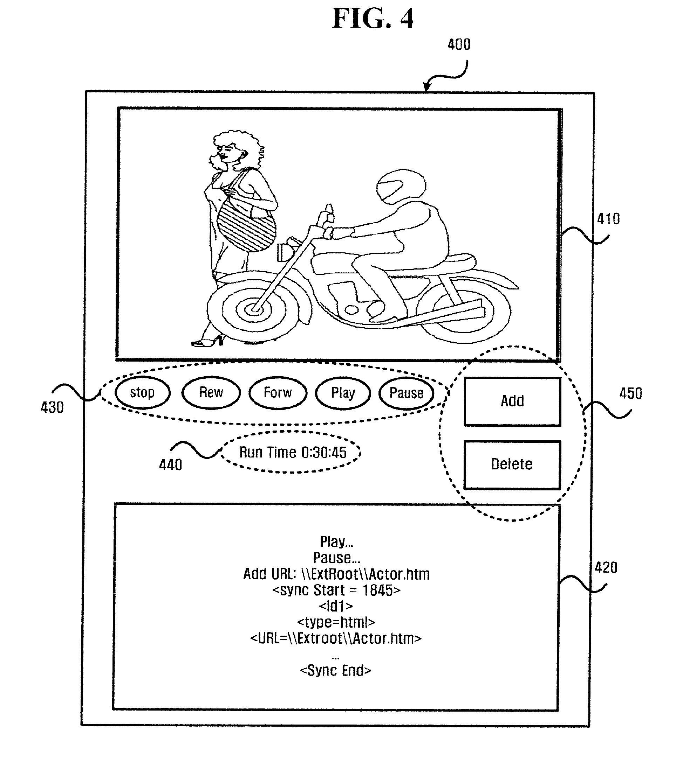

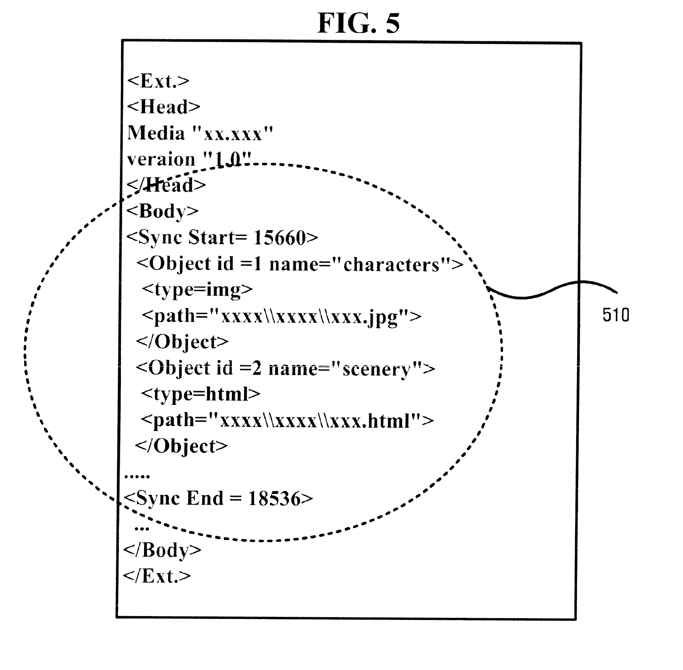

The VOD service provider constructs a server providing multimedia content so as to provide the multimedia content upon a user's request. In addition, the VOD service provider creates the interactive data information file using a predetermined editor tool, which will be described later with reference to FIGS. 4 and 5.

FIG. 4 illustrates the process of creating an interactive data information file using an editor tool undergone by a VOD service provider, and FIG. 5 illustrates an interactive data information file created by the process shown in FIG. 4.

While viewing the playback screen 410 of the multimedia content in the editor tool 400 shown in FIG. 4, the VOD service provider creates the interactive data information file for providing necessary information on object items such as characters or objects displayed on a playback screen 410 at a desired time. To aid in the creation of the interactive data information file, the editor tool 400 includes a playback screen 410, an editor window 420 for editing an interactive data information file containing information about the name, type, and path of an object item to be added in synchronization with the playback screen 410, various input buttons 430 for operating the playback screen 410, a playback time counter 440 for the current screen, and buttons 450 used to add or delete the interactive data information file edited in the editor window 420 to or from the playback screen 410.

An example of an interactive data information file created in the editor window 420 will now be described with reference to FIG. 5. First, the <Body> section 510 of the interactive data information file shown in FIG. 5 will be described. Referring to FIG. 5, a start time and an end time of the current interactive data information file synchronized with the playback screen are expressed in milliseconds [msec]. In addition, information about the ID and name of an object item (characters and scenery), a type (image and HTML), and a path (URL) are shown in FIG. 5.

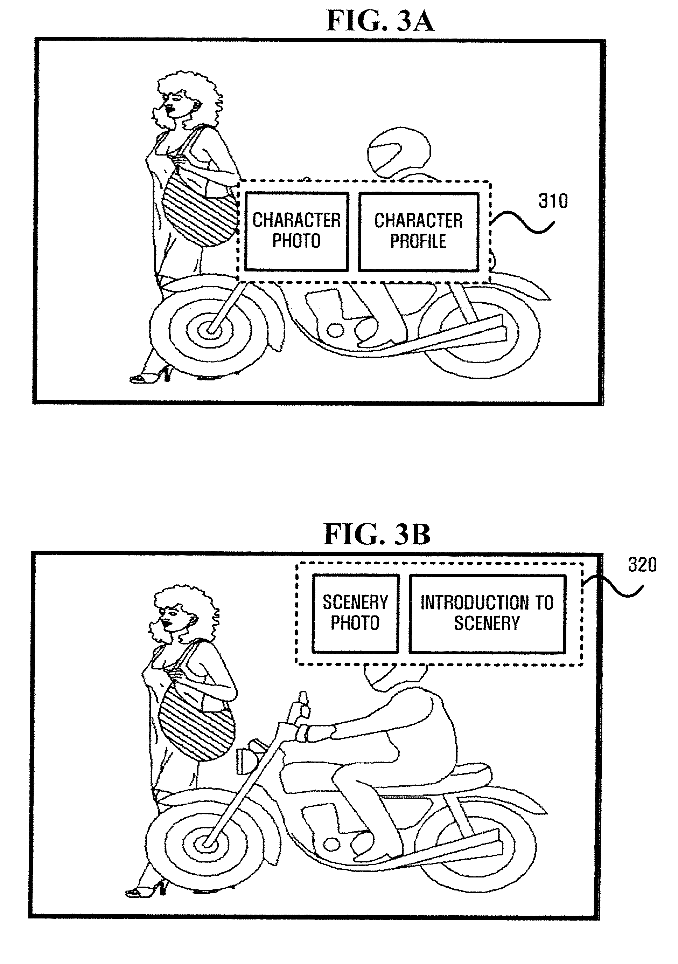

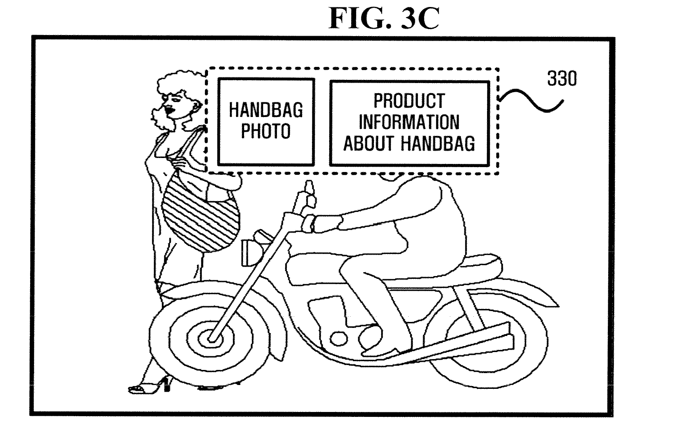

The parsing unit 120 analyzes the interactive data information file and stores the same in a node-type file having a predetermined time period. Here, the node-type file means a unit of an interactive data information file created by the VOD service provider using a separate editor tool, and is primarily displayed on the playback screen 410 of the multimedia content for a predetermined period of time. The file shown in FIG. 5 is a node-type file. The node-type file should define a start time and an end time synchronized with the multimedia content's playback screen, and should contain information about the name, type, and path of an object item. The name of the object item, which may be, for example, a character, a background or scenery item, or a commodity such as an accessory or clothing item worn by the character, is displayed on the playback screen of the multimedia content. The type of the object item displayed on the playback screen of the multimedia content may be text, an image, or a web page, and will be described later in detail with reference to FIGS. 2, 3A, 3B, and 3C.

The control unit 130 checks an elapsed playback time and confirms that an interactive data information file matching the current time exists. In this case, the interactive data information file exists as a node-type file.

The display unit 140 displays a list of object items expressed by the interactive data information file on the playback screen of the multimedia content in real time. Here, the object item list may display any type of information associated with a character, object, background location or background sound that is displayed on the playback screen of the multimedia content, which will be described with reference to FIG. 2.

FIG. 2 shows the process of displaying multimedia content and a list of object items in real time according to an exemplary embodiment of the present invention.

Referring to FIG. 2, a woman with a handbag on her shoulder and a man riding past the woman on a motorbike are displayed on a playback screen. While the media is played back, viewers may be curious about the two characters appearing on the screen, the location or scenery of the screen, the woman's handbag or the man's motorbike. In this case, upon the command of a user who views the multimedia content, the display unit 140 may display an object item list 210 containing information about the characters appearing on the screen, information about the location or scenery of the screen, information about the woman's handbag or information about the man's motorbike, in a box shape at a right lower side of the playback screen. That is, the information about the characters is displayed as "Characters", the information about the location or scenery of the screen is displayed as "Scenery", and the information about the woman's handbag or the information about the man's motorbike is displayed as "Accessories". The information about the object item list 210 is implemented by the interactive data information file stored as a node-type file by the parsing unit 120.

After the screen shown in FIG. 2 is displayed, the user selects one of the object items contained in the object item list 210. At this time, the display unit 140 displays detailed information about the one selected object item, which will be described in detail with reference to FIGS. 3A, 3B, and 3C.

FIG. 3A shows a process of displaying object items in real time according to a first exemplary embodiment of the present invention, FIG. 3B shows a process of displaying object items in real time according to a second exemplary embodiment of the present invention, and FIG. 3C shows a process of displaying object items in real time according to a third exemplary embodiment of the present invention.

If the user selects an item "1. Characters" from the object item list 210 shown in FIG. 2 to get information about the woman with a handbag on her shoulder and the man riding past the woman by motorbike, a box 310 displaying a character photo and a character profile are displayed on the screen, as shown in FIG. 3A. In addition, if the user selects an item "2. Scenery" from the object item list 210 shown in FIG. 2 to get information about the location or scenery of the screen, a box 320 displaying a photo of and an introduction to the location or scenery is displayed on the screen, as shown in FIG. 3B. Furthermore, if the user selects an item "3. Accessories" from the object item list 210 shown in FIG. 2 to get information about the woman's handbag, a box 330 displaying a photo of and product information about the handbag is displayed on the screen, as shown in FIG. 3C. The respective object items, which are displayed in the boxes 310, 320 and 330 in FIGS. 3A, 3B and 3C, are not stored in or transmitted by a server that transmits VOD service-related content, but are received from an external server (e.g., a separate server operated by a VOD service provider or an Internet server capable of providing services associated with object items).

The respective object items, which are displayed in the boxes 310, 320 and 330 in FIGS. 3A, 3B and 3C, may be displayed as a variety of types. That is, when the type is text or image, the text or image is downloaded through a path defined in the node-type file to then be displayed. When the type is an HTML document, a path defined in the node-type file is searched for on an external Internet server through a predetermined browser to then be displayed.

Meanwhile, a device for displaying the interactive data shown in FIG. 1 in real time may be an Internet protocol television (IP TV), which is a kind of interactive television.

The term "module", as used in the illustrated embodiments of the present invention, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to execute on one or more processors. The functionality provided for in the components and modules may be combined into fewer components and modules or further separated into additional components and modules. In addition, the components and modules may be implemented such that they execute on one or more CPUs in a communication system.

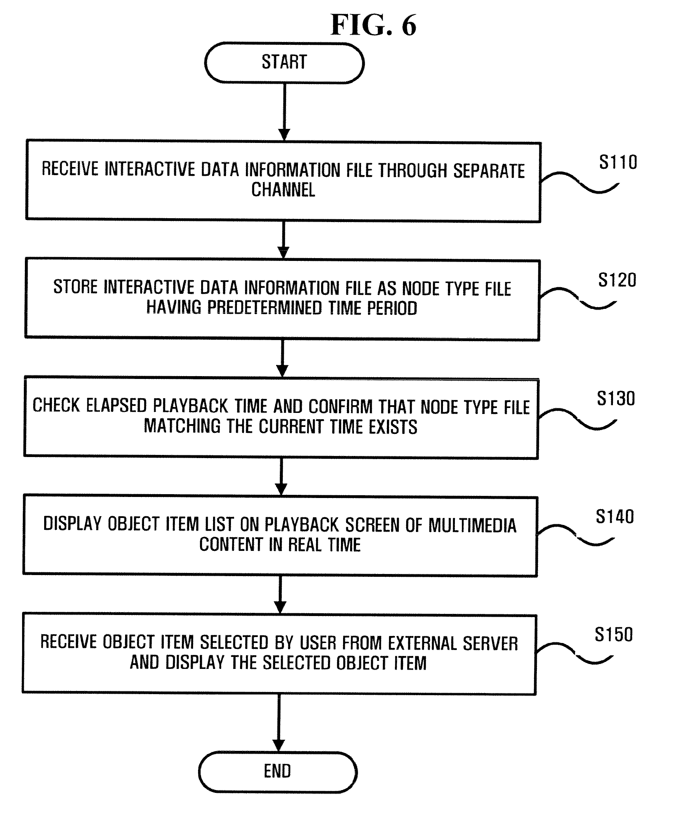

FIG. 6 is a flowchart illustrating a method of providing interactive data in real time in a video on demand (VOD) service according to an exemplary embodiment of the present invention.

In operation S110, a receiving unit (110 of FIG. 1) receives an interactive data information file for multimedia content currently being played back through a channel different from a multimedia-content-receiving channel. A parsing unit (120 of FIG. 1) analyzes the interactive data information file and stores the same in a node-type file having a predetermined time period in operation S120. As described above, the node-type file contains a start time and an end time synchronized with a playback screen of the multimedia content, and information about the name, type and path of an object item.

In addition, a control unit (130 of FIG. 1) checks the elapsed playback time of the multimedia content based on the current time, and confirms that a node-type file matching the current time exists in operation S130. If the node-type file exists, a display unit (140 of FIG. 1) displays an object item list expressed by the interactive data information file on the playback screen of the multimedia content in real time in operation S140. Finally, a user selects one among multiple object items contained in the object item list and the display unit 140 receives information about the selected object item from an external server and displays the selected object item in operation S150.

The present invention provides at least the following advantages.

First, a VOD-service-receiving terminal can previously receive and download an interactive data information file associated with multimedia content through a channel different from audio/video (AV) streams of the multimedia content in advance, thereby displaying a list of object items at a desired time upon a user's request in real time.

In addition, since VOD service providers can edit their desired interactive data and the parameters of their VOD service, users can receive object items from an external server in real time using a path defined in a previously received interactive data information file and stored in link information, enabling limited network bandwidth and the limited storage space of a set-top box to be efficiently utilized.

Furthermore, since an interactive data information file associated with multimedia content is received through a channel different from the audio/video (AV) streams of the multimedia content, overhead used by a receiving terminal in demultiplexing can be reduced.

The effects of the present invention are not to be limited to the foregoing description, and additional effects and advantages of the invention will be made apparent to those skilled in the art from the spirit and scope of the invention as defined by the appended claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying interactive data in a real-time streaming service, **characterised by**:
receiving (S110) an interactive data information file for multimedia content currently being played back, through a channel different from a multimedia-content-receiving channel;
displaying (S140) an object item list (210) expressed by the interactive data information file on a playback screen (410) of the multimedia content in real time; and
receiving (S150) the selected object item and displaying the same, if a user inputs a command to select at least one among multiple object items contained in the object item list (210).

2. The method of claim 1, wherein the receiving of the interactive data information file further comprises analyzing (S120) the interactive data information file and storing the same in a node-type file having a predetermined time period, wherein the node-type file contains a start time and an end time synchronized with the playback screen (410) of the multimedia content, and information about a name, a type and a path of an object item.

3. The method of claim 2, wherein the receiving of the interactive data information file further comprises checking (S130) an elapsed playback time of the multimedia content based on a current time, and confirming that a node-type file matching the current time exists.

4. The method of any preceding claim, wherein the object item is received from an external server of the real-time streaming service provider.

5. The method of any preceding claim, wherein the interactive data information file is created using an editor tool (400) of a real-time streaming service provider.

6. The method of any preceding claim, wherein the object item list (210) is displayed to be associated with one of a character, object, background location or background sound that is displayed on the playback screen (410) of the multimedia content.

7. The method of any preceding claim, wherein the object item list (210) is displayed by a command of a user viewing the multimedia content.

8. The method of claim 2, or of any of claims 3 to 7 when dependent on claim 2, wherein the type of the object item includes text, a web page, and an image.

9. The method of claim 2 or of any of claims 3 to 8 when dependent on claim 2, wherein the displaying of the object item comprises, when the type is text or image, displaying the text or image by downloading the same through a path defined in the node-type file, and when the type is an HTML document, displaying a path defined in the node-type file by searching for the path through a predetermined browser.

10. An apparatus for displaying interactive data in a real-time streaming service, comprising:
a playback unit (150) playing back multimedia content;
**characterised by**:
a receiving unit (110) receiving an interactive data information file for the multimedia content currently being played back, through a channel different from a multimedia-content-receiving channel; and
a display unit (140) displaying an object item list (210) expressed by the interactive data information file on a playback screen (410) of the multimedia content in real time, and if a user's command to select at least one of the object items contained in the object item list (210) is input, receiving the selected object item and displaying the same.

11. The apparatus of claim 10, further comprising a parsing unit (120) analyzing the interactive data information file and storing the same in a node-type file having a predetermined time period, wherein the node-type file contains a start time and an end time synchronized with a playback screen (410) of the multimedia content, and information about a name, a type and a path of an object item.

12. The apparatus of claim 11, further comprising a control unit (130) checking an elapsed playback time of the multimedia content based on a current time, and confirming that a node-type file matching the current time exists.

13. The apparatus of any of claims 10 to 12, wherein the object item is received from an external server of the real-time streaming service provider.

14. The apparatus of any of claims 10 to 13, wherein the interactive data information file is created using an editor tool (400) of a real-time streaming service provider.

15. The apparatus of any of claims 10 to 14, wherein the object item list (210) is displayed to be associated with one of a character, object, background location or background sound that is displayed on the playback screen (410) of the multimedia content.

16. The apparatus of any of claims 10 to 15, wherein the object item list (210) is displayed by a command of a user viewing the multimedia content.

17. The apparatus of claim 11 or of any of claims 12 to 16 when dependent on claim 2, wherein the type of the object item includes text, a web page, and an image.

18. The apparatus of claim 11 or of any of claims 12 to 17 when dependent on claim 2, wherein when the type is text or image, the display unit (140) displays the text or image by downloading the same through a path defined in the node-type file, and when the type is an HTML document, the display unit (140) displays a path defined in the node-type file by searching for the path through a predetermined browser.

19. An interactive Internet protocol television (IP TV) comprising:
a media player (150) playing back multimedia content;
**characterised by**:
a downloader (110) downloading an interactive data information file for the multimedia content currently being played back, through a channel different from a multimedia-content-receiving channel;
a parser (120) analyzing the interactive data information file and storing the same in a node-type file having a predetermined time period;
a control unit (130) checking an elapsed playback time of the multimedia content based on a current time, and confirming that a node-type file matching the current time exists; and
a display unit (140) displaying an object item list (210) expressed by the interactive data information file on a playback screen (410) of the multimedia content in real time, and if a user's command to select at least one of the object items contained in the object item list (210) is input, receiving the selected object item and displaying the same.

20. The interactive IP TV of claim 19, wherein the node-type file contains a start time and an end time synchronized with the playback screen (410) of the multimedia content, and information about a name, a type and a path of an object item.

21. A computer-readable recording medium having program code executed by a computer for performing a method of displaying interactive data in a real-time streaming service, the method **characterised by**:
receiving (S110) an interactive data information file for multimedia content currently being played back through a channel different from a multimedia-content-receiving channel;
displaying (S140) an object item list (210) expressed by the interactive data information file on a playback screen (410) of the multimedia content in real time; and
receiving (S150) the selected object item and displaying the same, if a user's command to select at least one among object items contained in the object item list (210) is input.
